# EUROPÄISCHE PATENTSCHRIFT

(11) **EP 2 078 892 B1**
(45) Veröffentlichungstag und Bekanntmachung des Hinweises auf die Patenterteilung: **10.08.2011**
(21) Anmeldenummer: 09000132.2
(22) Anmeldetag: 08.01.2009
(51) Int. Cl.: F16K 51/02, F16K 1/42, F16J 15/10

(54) **Vakuum-Ventil mit Dichtring**
Vacuum valve with seal ring
Soupape à vide dotée d'une bague d'étanchéité

(30) Priorität: 09.01.2008 DE 102008003725
(43) Veröffentlichungstag der Anmeldung: 15.07.2009
(73) Patentinhaber: VSE Vakuum Technology, 6890 Lustenau (AT)
(72) Erfinder: Bösch, Hubert, 6890 Lustenau (AT); Bösch, Stefan, 6890 Lustenau (AT)
(74) Vertreter: Riebling, Peter

(56) Entgegenhaltungen:
- DE-A1- 2 947 585
- DE-A1- 4 446 947
- DE-C1- 3 445 236

## Beschreibung

Die Erfindung betrifft ein Vakuum-Ventil mit Dichtring, wie es gemäß dem im Oberdegriff von Anspruch 1 definierten Merkmalen beispielsweise aus DE-A- 34 45 236 bekannt ist.
Mit dem Gegenstand der DE 2947585 A1 ist ebenfalls ein solches Vakuum-Ventil bekannt geworden, welches geeignet ist, in einer Vakuumleitung angeordnet zu sein, um Unterdrücke im Bereich vom Atmosphärendruck bis zu Ultrahochvakuum abzusperren.

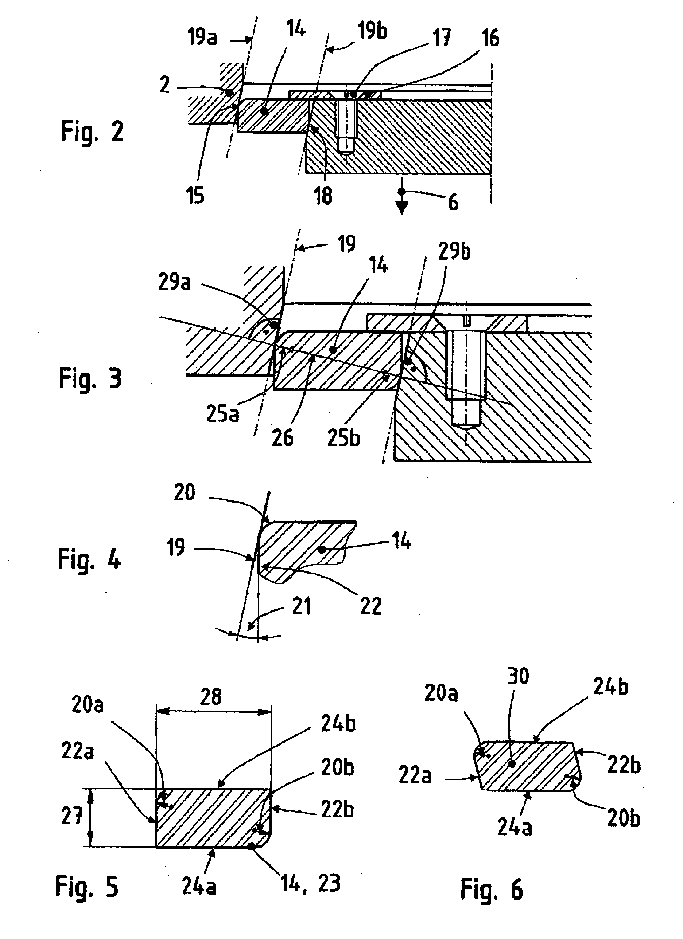

Für derartige Vakuumventile ist es bekannt, sogenannte Dichtringe zwischen einem Ventilteller und einem gehäuseseitigen Ventilsitz anzuordnen. Die genannte DE 294 75 85 A1 beschreibt verschiedene Ausführungsformen derartiger Dichtungsringe, wobei beispielsweise in Figur 6 ein rechteckförmiger Dichtungsring dargestellt ist, der beim Übergang von der Dichtstellung in die Offenstellung eine Verbiegung erfährt, welche stark materielbeanspruchend ist. Nachdem die Flächen dieses bekannten Dichtungsringes konisch ausgebildet sind, ist ein solcher Dichtungsring sehr schwierig herzustellen.
Weil er einen relativ dünnen Querschnitt hat, beim Übergang von der Schließstellung in die Offenstellung eine Verkippung erfährt, besteht im Übrigen die Gefahr, dass bei der Einwirkung bestimmter Kräfte dieser Ring überschnappt und seine Dichtungsfunktion nicht mehr erfüllt. Damit läuft er auf entsprechende Gegenflächen am Ventilsitz auf, hebt dort Späne ab und beschädigt den Dichtsitz irreparabel.

Eine Verbesserung dieser Situation wurde mit dem Gegenstand der DE 44 46 947 A1 versucht. Dort wurde von dem rechteckförmigen Querschnitt des Dichtrings abgegangen und stattdessen ein doppelkonischer Dichtring beispielsweise aus DE-A-34 45 236 bekannt ist. verwendet, der an seinem Außenumfang jeweils einander gegenüberliegende Radien aufweist und eine dazwischenliegende Einschnürung.

Grund für die Anfertigung dieser Einschnürungen ist, die beiden sich gegenüberliegenden Dichtringhälften gegeneinander beweglich zu gestalten. Es wurde dabei speziell Wert auf den Umstand gelegt, dass dieser Ring einen möglichst großen Abrollweg haben soll bei möglichst geringem Eigenwiderstand. Daher weist dieser Ring die erwähnte Einschnürung in seinem Querschnitt auf.

Es hat sich herausgestellt, dass die hier verwendeten Einschnürungen an einem doppelt konischen Dichtring nachteilig sind, weil auf diesem verminderten Querschnitt sehr hohe Spannungen bei verdünntem Querschnitt wirken. Der Ring wird wegen der einander gegenüberliegenden Radien sehr stark zusammengedrückt, um die entsprechenden Dichtkräfte zwischen den einander gegenüberliegenden Ventilsätzen aufzubringen. Damit wirken starke Schubspannungen auf den verminderten Querschnitt, was mit einer Beschädigung dieses Querschnittes verbunden sein kann.

Wegen des großen Abrollweges entstehen auch Blegespannungen in dem doppelt konischen Ring, welche wiederum von dem relativ dünnen Mittenquerschnitt aufgenommen werden müssen. Durch die auf den Ring beim Übergang zwischen der Offen- in die Schließstellung wirkenden Biegespannungen verformt sich dieser Ring elastisch, und es besteht dabei die Gefahr, dass der Ring nicht eine entsprechende Biegung erfährt, sondern stattdessen an dem gegenüberliegenden Ventilsitz entlang geschoben wird, was zu irreparablen, spanabhebenden Veränderungen an dem gegenüberliegenden Ventilsitz führen. Damit werden die Dichtflächen zerstört und unbrauchbar gemacht.

Weiterer Nachteil des bekannten doppelt konischen Ringes ist, dass die Fertigung sehr kompliziert ist, weil sehr viele konische Flächen mit unterschiedlichen Radien angefertigt werden müssen und hierfür spezielle Werkzeuge und Aufnahmen erforderlich sind.

Der Erfindung liegt deshalb die Aufgabe zugrunde, einen Dichtring für ein Vakuum-Ventil nach dem Stand der Technik so weiterzubilden, dass er bei im wesentlichen viereckförmigem Querschnitt leichter herstellbar ist, einen geringeren Abrollweg hat und die Gefahr der Beschädigung der gehäuseseitig angeordneten Ventilsitze nicht gegeben ist.

Zur Lösung der gestellten Aufgabe ist die Erfindung durch die technische Lehre des unabhängigen Patentanspruches 1 gekennzeichnet. Bevorzugte Ausgestaltungen sind in den abhängigen Ausprüchen definiert.

Mit der gegebenen technischen Lehre ergibt sich nun der wesentliche Vorteil, dass beim Übergang von der Öffnungsstellung in die Schließstellung und zurück der erfindungsgemäße Dichtungsring eine geradlinige Bewegung ausführt und eben gerade keine oder nur geringe auf Schubspannung oder Knickspannung beanspruchte Veränderung in seinem Querschnitt erfährt.

Aufgrund der linearen Bewegung des Dichtungsringes nach der Erfindung wird ein wesentlicher Vorteil gegenüber dem Stand der Technik erzielt, denn beispielsweise beim Gegenstand der DE 2 947 585 führte der dort gezeigte Dichtungsring eine Kippbewegung aus mit allen Nachteilen, die vorstehend beschrieben wurden.

Nun ist es erstmals möglich, einen rechteckförmig profilierten Dichtungsring zu schaffen, der sich dadurch auszeichnet, dass in nur zwei diametral gegenüberliegenden Kanten des Rechteckprofils entsprechende etwa gleichgroß ausgebildete Krümmungsradien angeordnet sind, wobei der eine Krümmungsradius an der Konusfläche der Gehäuseseite ansetzt und den dortigen gehäuseseitigen Dichtsitz bildet, während der gegenüberliegende Krümmungsradius am Dichtungsring an der tellerseitigen Konusfläche dichtend in Eingriff kommt.

Es wird hierbei bevorzugt, wenn die gehäuseseitige Konusfläche und die tellerseitige Konusfläche der beiden einander gegenüberliegenden Dichtsitze etwa gleich ausgebildet sind. Selbstverständlich ist es möglich, eine gewisse Winkelvariation im Bereich von bis zu +/-5° zu ermöglichen.

Es wurde nämlich herausgefunden, dass eine solche lineare Bewegung des Dichtungsringes sich dann einstellt, wenn die Verbindungslinie durch die beiden einander gegenüberliegenden abgerundeten Ecken des Rechteckquerschnittes die jeweilige Konuslinie im Dichtungssitz auf der Gehäuseseite und auf der Tellerseite so schneidet, dass sich annähernd ein rechter Winkel ergibt.

Dies ist zwar ebenfalls aus der Figur 6 der DE 2 947 585 A1 zu entnehmen, jedoch werden dort die beiden einander gegenüberliegenden rechten Winkel durch die Stirnflächen des schräg liegenden Rechteckquerschnittes des dort gezeigten Dichtungsringes gebildet.

Ganz anders als bei der vorliegenden Erfindung, denn dort ist der Dichtungsring in einer horizontalen Ebene ausgerichtet und die diametral einander gegenüberliegenden Kanten des Rechteckquerschnittes bilden die Anlageflächen mit dem Rechteckwinkel bezüglich des gehäuseseitigen und des tellerseitigen Ventilsitzes.

Damit liegen die rechten Winkel auf unterschiedlichen Höhen bezüglich einer horizontalen Ebene, was gerade bei der genannten Druckschrift DE 2 947 585 A1 fehlt.

Durch diesen besonderen Effekt hat sich herausgestellt, dass es nicht mehr zu dem unerwünschten Rutschen des Dichtungsringes an den zugeordneten gehäuseseitigen und tellerseitigen Dichtungsflächen kommt, sondern dass es zu einer satten, lastübertragenden und hohe Dichtungskräfte übertragenden Anlage kommt, ohne dass die Gefahr der spanabhebenden Störung der einander gegenüberliegenden Dichtsitze besteht.

In einer bevorzugten Ausgestaltung ist der Dichtungsring aus einem Metallmaterial ausgebildet, wie zum Beispiel rostfreiem Stahl, Hochnickellegierungen und dergleichen mehr. Es ist selbstverständlich auch möglich, geeignete andere Werkstoffe zu verwenden, wie z. B. Metall-Kunststoff-Verbundwerkstoffe, Grafitwerkstoffe, Kupfer- und Bronzelegierungen.

Das Gehäuse mit dem gehäuseseitigen Dichtungssitz ist bevorzugt aus einem Edelstahlmaterial ausgebildet, genauso wie der auf der Tellerseite ausgebildete Dichtungssitz.

Besonders vorteilhaft ist, dass der erfindungsgemäße Dichtungsring sehr leicht herstellbar ist, denn er weist keine schrägen bzw. konische Flächen auf. Er rutscht deshalb nicht im Sinne einer spanabhebenden Zerstörung der gehäuseseitigen und tellerseitigen Dichtflächen, und die Radien an den diametral einander gegenüberliegenden Kanten sind so gesetzt, dass sich ein Winkel zwischen einer gedachten Linie zwischen den beiden Radius-Mittelpunkten einstellt, der ungefähr einen rechten Winkel mit den beiden konischen Dichtungsflächen darstellt, die ihrerseits etwa parallel zueinander ausgebildet sind.

Dadurch ergibt sich eine leicht zu beherrschende Kraftverteilung. Die Radien, welche den Krümmungsradius an den Ecken des Rechteckquerschnittes des Dichtungsringes bestimmen, können im Extremfall so vergrößert werden, dass sie in einem einzigen Punkt zusammenfallen (oder sich sogar leicht überschneiden). Im Sinne der vorliegenden Erfindung wird jedoch ein relativ kleiner Krümmungsradius bevorzugt, so dass also die beiden Radiusmittelpunkte entfernt voneinander auf einer Linie liegen, welche durch jeweils eine der diametral gegenüberliegenden Kanten des Rechteckquerschnittes geht.

Bei einer solchen entfernt voneinander ausgebildeten Anordnung der beiden Radien besteht nämlich der Vorteil, dass mit relativ geringen Dichtungskräften eine hohe Dichtungswirkung erzielt wird. Dementsprechend ist auch der Kraftaufwand von Seiten des Spindelantriebes geringer als beim Stand der Technik.

Die vorliegende Erfindung geht absichtlich und zielgerichtet von der Erkenntnis des Standes der Technik ab, dass nämlich eine Eigenverformung des Ringes notwendig ist, um die geforderten Dichtungskräfte zu erreichen. Hier setzt die Erfindung ein, die vorsieht, dass der Ring aus einem Rechteckquerschnitt besteht, der sich nur unwesentlich oder nicht durchbiegt und dass lediglich die Dichtungskräfte an den relativ klein dimensionierten Radien im Bezug zu den schräg einander gegenüberliegenden Ventilsitzen auf der Gehäuse- und der Tellerseite erreicht werden.

Es ist die Krafteinleitung so zu gestalten, dass die beteiligten Teile (innerer und äußerer Konus der jeweiligen Dichtfläche) an der entscheidenden Stelle (nämlich dort, wo der Dichtungsring sie berührt) nur schwach oder gar nicht nachgeben.
Es sind auch weitere Ausführungen möglich und denkbar, z. B. als Zugschieber; Pendelschieber, In-Line-Ventile, Ventilklappen, Butterfly-Ventile, oder auch zur Abdichtung für eine Flanschverbindung. Es gelten aber auch für diese Ausführungen dieselben Grundsätze und die hier beispielhaft für ein Eckventil gezeigten Merkmale.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert einen Schnitt durch ein Vakuum-Ventil mit Dichtring nach der Erfindung
- Figur 2:: eine vergrößerte Darstellung des Dichtringes in Schließposition
- Figur 3:: die gleiche Darstellung wie Figur 2 mit Eintragung weiterer Einzelheiten
- Figur 4:: eine vergrößerte Darstellung des Dichtungseingriffes des Dichtungsringes am gehäuseseitigen Ventilsitz
- Figur 5:: eine vergrößerte und schematisierte Darstellung des Querschnittes des erfindungsgemäßen Dichtungsringes
- Figur 6:: eine gegenüber Figur 5 abgewandelte Ausführungsform

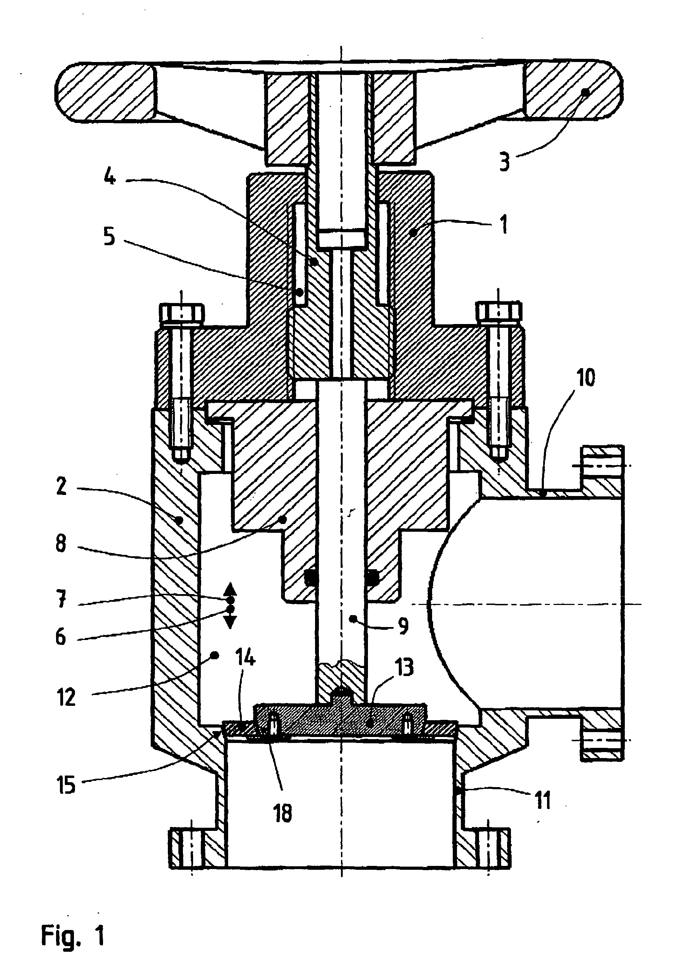

In Figur 1 ist allgemein dargestellt, dass ein Antriebsgehäuse 1 über entsprechende geeignete Schrauben mit einem Ventilgehäuse 2 verbunden ist. Das Antriebsgehäuse 1 wird von einer Spindel 4 durchgriffen, die drehfest mit einem Handrad 3 verbunden ist. Die Spindel ist im Gewindeeingriff mit einer innenseitigen Gewindebohrung im Antriebsgehäuse 1, so dass bei Drehung des Handrades 3 die Ventilstange 9 in Pfeilrichtung 6 nach oben oder in Pfeilrichtung 7 nach unten verschoben wird.

In an sich bekannter Weise ist das Ventilgehäuse 2 mit einer Führung 8 für die abgedichtete Führung der Ventilstange 9 versehen.

Das Ventilgehäuse 2 bildet somit einen Innenraum 12 aus, in den ein Einlassflansch 10 mündet.

Jenseits der Dichtung ist ein Auslassflansch 11 angeordnet.

Selbstverständlich können die Begriffe Einlass- und Auslassflansch 10, 11 miteinander vertauscht werden. Es ist gleichgültig, von welcher Seite her das Medium einfließt und ausfließt.

Wichtig ist, dass am freien Ende der Ventilstange 9 ein Ventilteller 13 fest angebracht ist, der seinerseits mit einem Dichtungsring 14 verbunden ist. Entscheidend für die vorliegende Erfindung ist nun die Wirkung des Dichtungsringes 14 mit dem tellerseitigen Ventilsitz 18 und dem gehäuseseitigen Ventilsitz 15.

Weitere Einzelheiten sind aus den Figuren 2 und 3 zu entnehmen.

Im Vergleich der Figuren 2, 3 und 5 ist erkennbar, dass der erfindungsgemäße Dichtungsring 14 im Wesentlichen aus einem Rechteckquerschnitt 23 besteht, wobei die diametral gegenüberliegenden Ecken des Rechteckquerschnittes 23 jeweils einen Radius 20a, 20b aufweisen.

Es wird bevorzugt, wenn die beiden Radien 20a, 20b etwa gleich ausgebildet sind. Aus Figur 2 ist erkennbar, dass der gehäuseseitige Ventilsitz 15 durch eine Konuslinie 19a gebildet wird und an dieser schrägen Konuslinie, die einen Winkel von z. B. 10° zur Vertikalen aufweist, liegt der obere Radius 20a des Dichtungsringes 14 lastübertragend und abdichtend an.

Ferner ist wesentlich, dass der tellerseitige Ventilsitz 18 ebenfalls eine etwa gleichgerichtete Konuslinie 19b aufweist und dass an dieser Konuslinie 19b wiederum der Radius 20b der diametral gegenüberliegenden Kante zum Radius 20a des Rechteckquerschnittes 23 anliegt.

Die Figuren 2 und 3 zeigen, dass der Dichtungsring 14 horizontal liegend angeordnet ist, weil er an seiner Oberseite durch eine Scheibe 16 gehalten wird, die mittels einer Schraube 17 am Ventilteller 13 festgeschraubt ist. Er verkippt deshalb nicht und führt keinerlei Verkantungen durch. Er bewegt sich deshalb linear in Pfeilrichtung 6 in Öffnungsrichtung und in Schließrichtung in Pfeilrichtung 7 entlang der beiden Ventilsitze 15, 18.

Es kommt daher zu keinem Verkippen und zu keinem Auflaufen mit einer entsprechenden spanabhebenden Zerstörung der diametral einander gegenüberliegenden Ventilsitze 15, 18.

Die Figur 3 zeigt, dass die beiden Radiusmittelpunkte 25a, 25b der beiden Radien 20a, 20b auf einer gedachten Verbindungslinie 26 liegen, welche Verbindungslinie genau durch die einander gegenüberliegenden Kanten des Rechteckquerschnittes 23 hindurchgehen und die gehäuseseitige Konuslinie 19a sowie die tellerseitige Konuslinie 19b im rechten Winkel 29a, 29b schneiden.

Es liegen also bezüglich einer horizontalen Linie in der Höhe zueinander versetzt angeordnete rechte Winkel 29a. 29b gegenüber, welche den Dichtungseingriff des Dichtungsringes 14 an den zugeordneten gehäuseseitigen Ventilsitz 15 bzw. den tellerseitigen Ventilsitz 18 definieren.

Statt einer Verkippung oder Verkantung kommt es also zu einem linearen Auflaufen dieses erfindungsgemäßen Dichtungsringes.

Die Figur 4 zeigt, dass der Winkel 21 etwa 10° sein kann, d. h. es ist wichtig, dass lediglich die diametral einander gegenüberliegenden Radien 20a, 20b in Dichtungseingriff mit den zugeordneten Ventilsitzen 15, 18 kommen, jedoch die übrigen Teile des Dichtungsringes 14 nicht. Dies führt dazu, dass beispielsweise die einander gegenüberliegenden Geraden 22a, 22b, welche die vertikalen Linien des Rechteckquerschnittes des Dichtungsringes 14 beschreiben, nicht unbedingt parallel zueinander sein müssen, wie dies die Figur 5 zeigt. Sie sind in der Figur 5 als vertikale Linien ausgebildet. Sie können jedoch auch gemäß Figur 6 als parallel zueinander angeordnete schräg liegende Linien ausgebildet sein, wodurch sich ein Parallelogrammquerschnitt 30 für den Querschnitt des Dichtungsringes 14 bildet.

Ebenso ist es möglich, die Linienführung nach Figur 6 mit der nach Figur 5 zu ersetzen, so dass beispielsweise die Gerade 22a in Figur 6 ersetzt wird durch eine vertikale Gerade 22a in Figur 5 und umgekehrt auch die schräg liegende Gerade 22b in Figur 6 ersetzt wird durch eine gerade vertikale Linie 22b nach Figur 5.

Dies gilt im Übrigen auch für die horizontalen Geraden 24a, 24b, die voneinander abweichen können.

Beispielsweise können die zueinander parallelen Geraden 24a, 24b bombiert ausgebildet sein oder Spitzen aufweisen.

Aus der vorstehenden Erläuterung ergibt sich, dass es wesentlich ist, dass bei einem annähernden Rechteckquerschnitt des Dichtungsringes 14, der horizontal liegend an den in der Höhe zueinander versetzt angeordneten Ventilsitzen 15, 18 anliegt, nur die diametral gegenüberliegenden Ecken des Dichtungsringes 14 eine Rolle spielen, weil diese nur in Dichtungseingriffen mit den zueinander zugeordneten Ventilsitzen 15, 18 kommen.

Die außerhalb dieses Dichtungseingriffes liegenden anderen Ecken dieses Rechteckquerschnittes und die diese Ecken miteinander verbindenden Geraden können in relativ freier Form gewählt werden.

Wegen der leichteren Herstellung des erfindungsgemäßen Dichtungsringes 14 wird jedoch die Formgebung nach Figur 5 bevorzugt.

Das Verhältnis von Höhe 27 zu Breite 28 des Rechteckquerschnittes ergibt sich aus der geometrischen Forderung, dass nämlich eine Verbindungslinie 26 durch die beiden diametral gegenüberliegenden Kanten, die gegenüberliegenden Konuslinien 19a, 19b im rechten Winkel jeweils schneiden soll.

Die Größe der Radien 20a, 20b ist relativ frei wählbar, es muss nur darauf geachtet werden, dass die übertragenen Kräfte nicht zu einer Beschädigung des gehäuseseitigen oder tellerseitigen Ventilsitzes 15, 18 führen.

Die Konuswinkel in den Dichtsitzen 15, 18 sind im Übrigen so gewählt, dass der Dichtungsring 14 nicht selbsthemmend diese Ventilsitze 15, 18 belastet, sondern er ist frei auf diesen Ventilsitzen 15, 18 von einer Offenstellung in eine Schließstellung bewegbar.

### Zeichnungslegende

- 1: Antriebsgehäuse
- 2: Ventilgehäuse
- 3: Handrad
- 4: Spindel
- 5: Spindelbohrung
- 6: Pfeilrichtung
- 7: Pfeilrichtung
- 8: Führung
- 9: Ventilstange
- 10: Einlassflansch
- 11: Auslassflansch
- 12: Innenraum
- 13: Ventilteller
- 14: Dichtungsring
- 15: Ventilsitz (gehäuseseitig)
- 16: Scheibe
- 17: Schraube
- 18: Ventilsitz (tellerseitig)
- 19: Konuslinie 19a, 19b
- 20: Radius 20a, 20b
- 21: Winkel
- 22: Gerade 22a, 22b
- 23: Rechteckquerschnitt
- 24: Gerade 24a, 24b
- 25: Radiusmittelpunkt a, b
- 26: Verbindungslinie
- 27: Höhe
- 28: Breite
- 29: rechter Winkel 29a, 29b
- 30: Parallelogrammquerschnitt

## Patentansprüche

1. Vakuumventil mit Dichtungsring (14) zwischen gleich orientierten Konusflächen von Ventilsitzen (18, 15) eines Ventiltellers (13) und eines Ventilgehäuses (2), wobei der Dichtungsring (14) im Querschnitt (23, 30) viereckförmig, insbesondere quadratisch, rechteck-, parallelogramm- oder rautenförmig, ausgebildet ist und mindestens zwei radial voneinander beabstandete Ringkanten Krümmungsradien (20a, 20b) aufweisen, welche im Ventil-Schließzustand Ventil-Dichtflächen mit den Konusflächen der Ventilsitze (18, 15) bilden, wobei der Dichtungsring (14) nur gering elastisch ausgebildet ist, **dadurch gekennzeichnet, dass** die Krümmungsradien (20a, 20b) in nur zwei diametral sich gegenüber liegenden Ecken des Querschnitts (23, 30) des Dichtungsringes (14) gebildet sind **und dass** die radiale Mittelachse des Querschnitts (23, 30) des Dichtungsringes (14) senkrecht zur axialen Mittelachse des gesamten Dichtungsringes (14) sowie senkrecht zur Bewegungsrichtung (6, 7) des Ventiltellers (13) angeordnet ist.

2. Vakuumventil nach Ansprüch 1, **dadurch gekennzeichnet, dass** die Krümmungsradien (20a, 20b) des Dichtungsrings (14) gleich oder unterschiedlich groß sind.

3. Vakuumventil nach einem der Ansprüche 1 oder 2, **dadurch gekennzeichnet, dass** eine Verbindungslinie (26) durch die beiden Mittelpunkte (25a, 25b) der Krümmungsradien (20a, 20b) die beiden Konusflächen der Ventilsitze (18, 15) im rechten Winkel schneidet.

4. Vakuumventil nach einem der Ansprüche 1 bis 3, **dadurch gekennzeichnet, dass** die Krümmungsradien (20a, 20b) auf unterschiedlichen Höhen bezüglich der Bewegungsrichtung (6, 7) des Ventiltellers (13) liegen.

5. Vakuumventil nach einem der Ansprüche 1 bis 4, **dadurch gekennzeichnet, dass** eine Symmetrieachse des Dichtungsrings (14) in einer horizontalen Ebene senkrecht zur Bewegungsrichtung (6, 7) des Ventiltellers (13) ausgerichtet ist.

6. Vakuumventil nach einem der Ansprüche 1 bis 5, **dadurch gekennzeichnet, dass** der Dichtungsring (14) aus rostfreiem Stahl, Hochnickellegierungen, Metall-Kunststoff-Verbundwerkstoffe, Grafitwerkstoffe oder Kupfer- und/oder Bronzelegierungen besteht.

7. Vakuumventil nach einem der Ansprüche 1 bis 6, **dadurch gekennzeichnet, dass** mindestens die Konusflächen der Dichtungssitze (15, 18) aus einem Edelstahlmaterial ausgebildet sind.

8. Vakuumventil nach einem der Ansprüche 1 bis 7, **dadurch gekennzeichnet, dass** der Ventilteller (13) an einer längsverschieblichen Ventilstange (9) angeordnet ist.

9. Vakuumventil nach einem der Ansprüche 1 bis 8, **dadurch gekennzeichnet, dass** der Dichtungsring (14) an dem Ventilteller (13) oder an dem Ventilgehäuse (2) lösbar mittels Haltemitteln (16, 17) gehalten ist.

## Claims

1. Vacuum valve with a sealing ring (14) between identically oriented cone faces of valve seats (18, 15) of a valve disc (13) and a valve housing (2), wherein the sealing ring (14) is quadrangular, in particular square, rectangular, parallelogram-shaped or rhombic in cross-section (23, 30) and at least two ring edges, which are radially spaced apart from one another, have radii of curvature (20a, 20b), which in the closed state of the valve form valve sealing faces with the cone faces of the valve seats (18, 15), the sealing ring (14) being configured only slightly resiliently, **characterised in that** the radii of curvature (20a, 20b) are formed in only two mutually diametrically opposing corners of the cross-section (23, 30) of the sealing ring (14) and **in that** the radial centre axis of the cross-section (23, 30) of the sealing ring (14) is arranged perpendicular to the axial centre axis of the entire sealing ring (14) and perpendicular to the movement direction (6, 7) of the valve disc (13).

2. Vacuum valve according to claim 1, **characterised in that** the radii of curvature (20a, 20b) of the sealing ring (14) have the same or different sizes.

3. Vacuum valve according to either of claims 1 or 2, **characterised in that** a connecting line (26) through the two centre points (25a, 25b) of the radii of curvature (20a, 20b) intersects the two cone faces of the valve seats (18, 15) at a right angle.

4. Vacuum valve according to any one of claims 1 to 3, **characterised in that** the radii of curvature (20a, 20b) are located at different heights with respect to the movement direction (6, 7) of the valve disc (13).

5. Vacuum valve according to any one of claims 1 to 4, **characterised in that** an axis of symmetry of the sealing ring (14) in a horizontal plane is oriented perpendicular to the movement direction (6, 7) of the valve disc (13).

6. Vacuum valve according to any one of claims 1 to 5, **characterised in that** the sealing ring (14) consists of stainless steel, high-nickel alloys, metal-plastics composite materials, graphite materials or copper and/or bronze alloys.

7. Vacuum valve according to any one of claims 1 to 6, **characterised in that** at least the cone faces of the sealing seats (15, 18) are made from a high-grade steel material.

8. Vacuum valve according to any one of claims 1 to 7, **characterised in that** the valve disc (13) is arranged on a longitudinally displaceable valve rod (9).

9. Vacuum valve according to any one of claims 1 to 8, **characterised in that** the sealing ring (14) is releasably held on the valve disc (13) or on the valve housing (2) by means of holding means (16, 17).

## Revendications

1. Soupape à vide dotée d'une bague d'étanchéité (14) entre deux surfaces coniques, de même orientation, de sièges de soupape (18, 15) d'une tête de soupape (13) et d'une enveloppe de soupape (2), étant précisé que la bague d'étanchéité (14) a une coupe transversale (23, 30) quadrangulaire, en particulier en forme de carré, de rectangle, de parallélogramme ou de losange, et qu'au moins deux arêtes de la bague espacées radialement l'une de l'autre ont des rayons de courbure (20a, 20b) qui, en position de soupape fermée, forment des surfaces d'étanchéité de soupape avec les surfaces coniques des sièges de soupape (18, 15), étant précisé que la bague d'étanchéité (14) n'est que faiblement élastique, **caractérisée en ce que** les rayons de courbure (20a, 20b) ne sont formés que dans deux coins diamétralement opposés de la coupe transversale (23, 30) de la bague d'étanchéité (14), et **en ce que** l'axe médian radial de la coupe transversale (23, 30) de la bague d'étanchéité (14) est perpendiculaire à l'axe médian axial de toute la bague d'étanchéité (14) et perpendiculaire au sens de mouvement (6, 7) de la tête de soupape (13).

2. Soupape à vide selon la revendication 1, **caractérisée en ce que** les rayons de courbure (20a, 20b) de la bague d'étanchéité (14) sont de même taille ou de tailles différentes.

3. Soupape à vide selon l'une des revendications 1 ou 2, **caractérisée en ce qu'**une ligne de liaison (26) qui traverse les deux centres (25a, 25b) des rayons de courbure (20a, 20b) coupe les deux surfaces coniques des sièges de soupape (18, 15) à angle droit.

4. Soupape à vide selon l'une des revendications 1 à 3, **caractérisée en ce que** les rayons de courbure (20a, 20b) sont situés à des hauteurs différentes par rapport au sens de mouvement (6, 7) de la tête de soupape (13).

5. Soupape à vide selon l'une des revendications 1 à 4, **caractérisée en ce qu'**un axe de symétrie de la bague d'étanchéité (14) est orienté dans un sens horizontal perpendiculairement au sens de mouvement (6, 7) de la tête de soupape (13).

6. Soupape à vide selon l'une des revendications 1 à 5, **caractérisée en ce que** la bague d'étanchéité (14) se compose d'acier inoxydable, d'alliages à haute teneur en nickel, de matériaux composites métal-matière plastique, de matériaux à base de graphite ou d'alliages de cuivre et/ou de bronze.

7. Soupape à vide selon l'une des revendications 1 à 6, **caractérisée en ce que** les surfaces coniques des sièges de soupape (15, 18), au moins, se composent d'un matériau à base d'acier spécial.

8. Soupape à vide selon l'une des revendications 1 à 7, **caractérisée en ce que** la tête de soupape (13) est disposée sur une tige de soupape (9) mobile longitudinalement.

9. Soupape à vide selon l'une des revendications 1 à 8, **caractérisée en ce que** la bague d'étanchéité (14) est fixée à la tête de soupape (13) ou à l'enveloppe de soupape (2) de manière amovible à l'aide de moyens de fixation (16, 17).
